# EUROPEAN PATENT APPLICATION

(11) **EP 4 667 883 A2**
(43) Date of publication of application: **24.12.2025**
(21) Application number: 25213995.1
(22) Date of filing: 21.10.2022
(51) Int. Cl.: G01G 23/01

(54) **A CALIBRATION DEVICE FOR WEIGHING SYSTEMS**

(30) Priority: 21.10.2021 DK PA202101005; 22.03.2022 DK PA202200232
(62) Divisional of application: 22808713.6
(71) Applicant: Eilersen Calibration Solutions ApS, 2980 Kokkedal (DK)
(72) Inventor: EILERSEN, Frederik Juul, 2980 Kokkedal (DK)
(74) Representative: Dragsted Partners A/S

(57) **Abstract**

A calibration device for weighing systems, the calibration device may be configured to apply a force between a first part and a second part, e.g. between a container and a base, the calibration device having a stationary assembly and a dynamic assembly, wherein the dynamic assembly is configured to move relative to the stationary assembly during use, wherein the stationary assembly comprises: a first attachment part configured to be attached to a container or a base, an actuator device body, a load cell having a first end and a second (load receiving) receiving end, where the first end is mechanically coupled with the actuator device body and the second end is mechanically coupled with first attachment part, the dynamic assembly comprising: second attachment part configured to be attached to a container or a base (foundation),a moveable part reciprocating in the device body along a force application axis and a moveable rod connected with the moveable part and connected with the second attachment part.

## Description

### Technical field

A calibration device for weighing systems, the calibration device configured to apply a force between a container and a base.

### Background

Tanks or large vessels are often used in manufacturing facilities, such as in the pharmaceutical and food industry, to store ingredients or a mixture of components for production of a product, where the product may be mixtures of two or more components. These storage or mixing vessels are often provided with a weighing system, so that the users of the vessels know how much of the product is present in the vessel, or so that the users can extract a certain amount of product or dose from the tank, and where the weighing system is capable of providing a representation of the amount and/or mass of the extracted product.

The weighing systems are often in the form of one or more load cells, where the load cells are capable of rendering a representation of the force applied to the load cell via the tank, and where the representation may be utilised to extract a unit representing a weight or a mass of the tank and/or the contents of the tank. The weighing systems need to be calibrated periodically to ensure that the weighing systems reproduce a correct representation of the mass present inside the container.

There are a number of ways such calibrations may be performed. One method of calibrating a tank system may be where the tank is emptied, and where a predefined amount of purified liquid, such as purified water, is used to fill the tank from its empty state to its full state. During the filling, the amount of liquid applied into the vessel is monitored with a flowmeter, so that it is possible to follow the curve of the weighing system from its empty state to a full state, using this data to confirm that the weighing system is operating correctly, or to calibrate the weighing system to the results of the filling of the tank to ensure that future measurements are correct. This calibration technique is very time-consuming and expensive, as the vessel has to be emptied and cleaned prior to the calibration and has to be cleaned subsequently to the calibration to prepare the container for the components the tank is to receive. Furthermore, when this calibration method is used, the liquid used for the calibration has to be discarded, as the liquid is no longer clean. Thus, this calibration technique may be seen as very time-consuming, and expensive, as the purified liquid might cost in the vicinity of EUR 1 pr. litre, and each container may be capable of holding up to 40,000 litres or more. Thus, the cost of the liquid may be a very significant factor during calibration. Furthermore, the time-consuming calibration method using liquid means that the vessel cannot be used for production which limits the production capacity.

Another method for calibration of the weighing system may be where a tension load cell and a hydraulic piston are attached in one end in series to a tank, and where an opposite end is attached to a foundation. By applying hydraulic force to pull the tank towards the foundation, the tension load cell will indicate the amount of force applied to the tank, and where the output of the weighing system may be compared to the force applied by the hydraulic piston. However, this type of calibration system may be seen as very bulky, due to the size of the hydraulic piston and the load cell, which makes it difficult to retrofit this type of system to an existing container, especially when containers are placed close to each other in a manufacturing facility, or where there are numerous process piping or connections surrounding the containers.

Conventional systems for calibrating a tank may be seen in e.g. WO 2004/088259 or WO 2020/057034. Both of these systems comprise a hydraulic device, where the hydraulic device is in the form of a pull force hydraulic cylinder, where the cylinder housing is attached to the base, and the piston rod is adapted to apply a force directly to a load cell either via tension force or compression force. Thus, the stationary part of the device is the cylinder housing, and the dynamic part of the device is the piston rod, a force application part and the load cell. Thus, when a force is applied, the dynamic part will move relative to the stationary part, where this movement may cause inaccuracies in the measurements, as the force vector of the applied force may be offset during force application.

Thus, there may be a need to provide a more compact and accurate calibration system with easier handling for bulk containers, process tanks and vessels.

In accordance with the invention a calibration device for weighing systems is provided, the calibration device may be configured to apply a force to a first part and a second part, e.g. between a container and a base, the calibration device having a stationary assembly and a dynamic assembly, wherein the dynamic assembly is configured to move relative to the stationary assembly during use, wherein the stationary assembly comprises: a first attachment part configured to be attached to a container or a base (foundation), an actuator device body, a load cell having a first end and a second (load receiving) end, where the first end is mechanically coupled with the actuator device body, and the second end is mechanically coupled with first attachment part, the dynamic assembly comprising: a second attachment part configured to be attached to a container or a base (foundation), a moveable part reciprocating in the device body along a force application axis and a moveable rod connected with the moveable part and connected with the second attachment part.

The calibration device may be configured to provide a force between a first part and a second part, where the first part and the second parts have e.g. a measurement device positioned between them, such as a load cell or similarly, where the measurement device is to be calibrated by the application of a specific and precise force.

Within the understanding of the present invention the actuator device body and the moveable part may comprise an actuator device, where the actuator device may be a hydraulic, an electric (electrical) or a mechanical actuator device.

The moveable part and the moveable rod may be the same part, depending on the application, or in case the moveable part is part of a hydraulic device, the moveable part may be a piston, and the moveable rod may be a piston rod.

Within the understanding of the present invention, the term load cell may be understood as a force transducer, where it may convert force into an electrical signal that may be measured and standardised. The increase of force applied to the load cell may cause the electric signal to change proportionally. A tension load cell may be seen as a load cell where a tension force is translated into an electrical signal. A compression load cell may e.g. be a load cell where the body of the load cell may deform upon application of a compression force, and where sensors positioned on or/in the load cell are capable of registering the deformation of the load cell and transform the deformation into an electrical signal.

By providing the calibration device in the form of a stationary assembly and a dynamic assembly, the stationary assembly is adapted to provide a counterforce to a force applied to a tank and/or a container using the dynamic assembly. Thus, the force applied to the stationary assembly, where the stationary assembly comprises a load cell, is a resulting counterforce which is applied via the dynamic assembly. Thus, as the force is not applied directly to the load cell, the load cell will measure a resulting force, and any interference, mechanical noise or deflection (elastic deformation) applied via the dynamic assembly to the base and/or the tank is not applied directly to the load cell, which improves the quality of the measurements.

Furthermore, by providing a stationary assembly comprising an attachment part, a load cell and the stationary part of the actuator device (hydraulic device), it is possible to ensure that if the force applied via the dynamic part is offset, this offset will not affect the stationary part, as the stationary part may have a force application axis that is predefined and constant during a calibration session or a calibration procedure. Thus, any inaccuracies that may affect the dynamic part of the calibration device are eliminated by including the load cell and/or the force measurement part in the stationary part of the calibration device.

Furthermore, by dividing the calibration device into a stationary assembly and a dynamic assembly it is possible to limit the size of the stationary assembly significantly, by providing all non-moveable parts of the calibration device in an assembly having a small physical scope/footprint, which allows the calibration device to be applied between a tank and a base, where the distance between the tank and the base is limited. Thus, a calibration device that has a limited distance from the first attachment part to the second attachment part may be introduced between the tank and the base.

Within the understanding of the present invention, the terms stationary assembly and dynamic assembly may be understood as relative terms, where one part moves relative to another part which may be fixed or secured relative to a fixed point (foundation, base, tank, container, weighing system).

The force application part (i.e. piston rod or second attachment member) may in one end be connected to the tank or a base and where an application of a tension force between the piston and the tank or base causes an application of force on the weighing system of e.g. a tank. The tension force may be applied via an actuation device, where the actuation device may e.g. apply a force along a direction of a force application axis, and where force is directly translated to the piston to translate the force directly to the tank and/or the base. When the force is applied to the piston along the force application axis, the first end of the piston pulls onto the tank or the base, while the second end of the piston may communicate an equal or proportional force to the load receiving end of the compression load cell, where the force applied to the compression load cell and/or the tension load cell may be translated into an electrical signal, where the electrical signal represents the amount of force that is applied to the first end of the piston, and thereby an indication of the magnitude of tension force that is applied to the weighing system.

In one embodiment, the actuator device may be a hydraulic device, a mechanical actuating device or an electrically actuating device. The actuator device may have a stationary part, i.e. a part that may be part of the stationary part of the calibration device, and a moveable part that may be part of the dynamic part of the calibration device. The actuation device may have a housing where a force application rod may move along a force application axis to provide a force along the force application axis in either a push or a pull direction. A mechanical solution may be a threaded member, that moves relative to the housing, where a rotational member in the housing, having a cooperating thread may provide force to the threaded member, where the rotational member rotates, while the threaded member is stationary in a rotational direction.

Within the understanding of the present invention, the term "stationary assembly" may be understood in the relation to a dynamic assembly. In one embodiment, the stationary assembly may comprise a load cell, where a part of the load cell may be flexible in order to register a compression, or a tension load applied to the load cell. Even though the load cell may be flexible, it should be understood that the force of the calibration may not be applied directly to the load cell but may be part of the stationary assembly where the force applied via a hydraulic device may provide a resulting force on the load cell. Thus, the flexibility of the load cell may mean that the stationary assembly may alter in length due to the flexing of the load cell, where the length alteration is a result of a force applied to the load cell, where the load cell may e.g. be compressed or elongated due to the applied force.

In one exemplary embodiment, the actuator device may be a hydraulic actuating device, such as a hydraulic cylinder having a moveable piston, where the actuator body and/or the housing encircles a hydraulic piston and/or a hydraulic rod. The hydraulic cylinder may be a hollow plunger, a hollow bore and or a hollow ram cylinder. This may further mean that the actuator body and/or the housing may enclose or encapsule any part of the hydraulic actuating device that may move and/or be exposed by the hydraulic barrel. By having the actuator body and/or a housing that encircles the hydraulic piston and/or the hydraulic rod it may be possible to ensure that all parts of the hydraulic actuation device that may be exposed to hydraulic fluid are encapsulated. In prior art devices, the hydraulic cylinders are cylinders where the piston rod extends out of the barrel in an extended position, and where the tension force is applied by moving the piston rod into the barrel of the hydraulic cylinder, i.e. where the starting position is where the hydraulic cylinder is in its extended position, and where the tension force is applied by pulling the piston rod into the cylinder barrel, towards a contracted (shortened) position. This means that the piston rod is exposed to the outside, where the piston rod has a hydraulic oil film on the outside, as the cylinder barrel is filled with hydraulic fluid, and where the piston rod extends outside the cylinder barrel, the outer surface of the rod being covered with hydraulic fluids. The presence of hydraulic fluid may cause hygienic issues, especially in pharmaceutical production facilities, biotech production facilities, chemical production facilities, food production facilities and other types manufacturing plants or production facilities, where the weighing device/system holds material that cannot be contaminated by external contaminants. Thus, by providing an actuator body and/or a housing that encloses all moveable parts of the hydraulic actuating device, the actuator device and/or the calibration device may be improved on a hygienic level, as all surfaces of the calibration device that face the outside are free from hydraulic fluids and provide less risk of contaminating the weighing devices and/or the surroundings of the weighing devices. Several types of production facilities have a very high requirement for hygiene, which means that any type of contaminant within the production facility may have catastrophic consequences to the quality of the intermediate and/or final products.

In one exemplary embodiment, the actuator body may be a hydraulic cylinder barrel, and the moveable part may be a hydraulic piston positioned inside the cylinder barrel. The hydraulic piston may have a central opening allowing a moveable rod to be positioned inside the central opening, where the rod engages the hydraulic piston to allow the forces applied by the piston to be transferred to the moveable rod.

In one exemplary embodiment, the hydraulic cylinder may apply a tension force to the calibration device, where the initial position of the hydraulic cylinder is a contracted position, and where the tension force is applied by transforming the hydraulic cylinder into its extended position. By having the hydraulic cylinder in its contracted position prior to applying tension to the weighing system, the calibration device may have a smaller outer dimension than prior art devices, which allows the device to be positioned into smaller and tighter spaces.

In one exemplary embodiment, the moveable part of the actuator device may have a first end and a second end, where first end faces in the direction of the second attachment part, and the second end faces in the direction away from the second attachment part along the force application axis, where the moveable rod may be connected with the second end of the moveable part. Thus, the moveable rod may be connected to the part of the moveable part that faces away from the second attachment part, which means that when the moveable part is actuated in the direction away from the second attachment part (applying tension to the calibration device), the second end of the moveable part interacts with the moveable rod to pull it in a direction away from the second attachment part, thereby moving the second attachment part towards the actuator device body. This may also mean that the part of the moveable rod that interacts with the second end of the moveable part is moved in a direction away from the actuator device body along the force application axis when a tension force is applied to the weighing device using the calibration device.

In one exemplary embodiment, the total weight of the calibration device may be less than 15 kg, or less than 11 kg, or may be less than 10 kg. Within the understanding of the present disclosure, the total weight may include the actuation device, the attachment parts as well as the load cell of the calibration device. By providing a calibration device that has a reduced weight, the calibration device may be transported from one position to another position by a user of the system or by an employee despite very restrictive safety regulations on how much weight one person is allowed to carry while working. This also makes it easier to allow one user to mount and/or install the calibration system without the assistance of further workers. Thus, the cost of installing or using the calibration device may be reduced, as it will only be necessary to have one user to install and perform the calibration using the calibration device. Furthermore, by having a low weight the influence of the calibration device on the load cells or the weighing system, to be calibrated, will be reduced, as the weighing system may be close to is natural zero point when initiating the calibration process. The natural zero point may be where the weighing system does not have any contents or product to be weighed, and the zero point may be total weight of an empty weighing system.

In one exemplary embodiment, the actuator device body may be made of aluminium or an aluminium alloy. By having the actuator device body in aluminium it may be possible to reduce the weight of the calibration device so that the weight of the calibration device does not influence the calibration of the weighing system significantly. A calibration device having a high weight means that the zero point of the load cells to be calibrated are offset by the weight of the calibration device. Thus, by reducing the weight of the calibration system, it is possible to calibrate the load cell of the weighing system across a range that is close to the realistic or actual range of the weighing system. Thus, if a weighing system has a zero point where the weighing system is empty, and a calibration system that is heavy, e.g. 50kg or more, the calibration of the weighing system cannot be performed across the entire range of the weighing system, but is offset by the weight of the calibration device. Thus, by having calibration devices having low weight, it is possible to move the offset closer to the actual zero point of the weighing system to be calibrated.

In one exemplary embodiment, the calibration device and/or the actuator body may be provided with a flat face hydraulic coupler. By having a flat face hydraulic coupler, it is possible to reduce the possibility of air entering the hydraulic system of either the actuator body and/or the moveable part and the hydraulic hoses and the hydraulic pump(s). Thus, there is a reduced risk that air enters the hydraulic system, which increases the stability of the force applied via the calibration device, as a hydraulic cylinder does not operate optimally when there is air in the hydraulic system, as air may be compressed while hydraulic fluid is substantially incompressible.

When a weighing system is calibrated, there are often defined certain target points of weight of the weighing system, and it may be important set the calibration device to calibrate that the target points, where the calibration device may be required to hold the tension for a predefined length of time. If air is present inside the hydraulic fluid, it may be difficult to maintain the predefined tension as the air may interfere with the pressure inside the hydraulic cylinder. Thus, it may be important to ensure that air does not enter the hydraulic fluid and/or the hydraulic circuit of the calibration device.

In one exemplary embodiment, the stationary part may have a force measurement axis that extends at least from a hydraulic device body towards the first attachment part, where the force measurement axis is stationary during calibration measurement and during application of force along the force application axis. During a calibration, or during the setup of the calibration device, the force application axis may change, as there may be flexibility in the movement between the tank/container and the base, causing the force application axis to shift during application of force during calibration. By providing a force measurement axis in the stationary part, the calibration process will not change the position of the force measurement axis or the force that is applied to the load cell is maintained in a predefined direction.

In one exemplary embodiment, the stationary assembly further comprises a housing. The housing may be connected with the base of the load cell, where the base of the load cell may be seen as a part of the load cell which provides a counterforce of a measured load to a load cell. Thus, for a compression load cell, the base may be the opposite end of the load receiving end of the load cell. For a S-type load cell, the base may be one of the arms of the load cell providing a counterforce for a tension load applied to the opposing arm. The arms of an S-type load cell may be ends of a load cell where the first arm is a first end, and the second arm is a second end.

In one exemplary embodiment, the actuator device body may form a housing. The actuator body may be directly connected to the load cell, so that when the moveable part moves along the force application axis, and a force is transmitted to the actuator device body via the moveable part and/or the moveable rod, the force may be directly transmitted to the first end of the load cell via the actuator body. Thus, by providing a direct coupling between the load cell and the actuator body it is possible to reduce the risk that an intermediate part may induce measurement errors, should the intermediate part move relative to the actuator body and/or the load cell, or should the intermediate part deform in any way. By having the actuator device body forming a housing the size and weight of the calibration device may be reduced.

The actuator device body and/or the housing may be rigid in the direction of the force application axis, which means that the actuator device body and/or the housing does not deform when the calibration device is connected to the weighing system, and a force is applied to the weighing system via the calibration device. Thus, the rigidity of the housing and/or the actuator device body reduces the risk of a measurement error as the force applied via the moveable part is not absorbed or lost in the actuator device body and/or the housing, which means that the force is transferred directly from the moveable part to the load cell of the stationary assembly, or where at least 99% of the force applied via the moveable part is transferred to the load cell, where the first attachment and the second end of the load cell provide a counterforce to the force generated by the moveable part.

Within the understanding of the present disclosure, the weighing system may comprise a tank and/or container and a base, where a load cell may be positioned between the tank/container and the base, and where the load cell measures force applied to the base (foundation) by the tank/container. It may be understood that the weighing system may be a mobile weighing system, where the base may e.g. be on wheels. Thus, when the calibration is performed, the calibration device is configured to be attached between the base of the weighing system and the tank/container. However, when a weighing system is permanently attached to a foundation, such as the ground or a platform, the ground or the platform may be seen as the base of the weighing system, where the calibration device is connected between the platform and/or the foundation and the tank/container.

In one exemplary embodiment of the present invention, the moveable part and/or the moveable rod may have a maximum stroke distance inside the actuator device body that is 20 mm or less, or that is 15 mm or less or that is 10 mm or less. Thus, the moveable part and/or the moveable rod are configured to travel 20 mm or less along the force application axis, which means that the movement of the dynamic assembly is limited. Thus, if the actuator body and the moveable part (actuator e.g. a hydraulic cylinder) has a capacity of 10 tonnes, the entire capacity may be driven along the stroke distance of the cylinder.

In one exemplary embodiment of the present invention, the moveable part may have a first stroke length during calibration, and the load cell may have a first deformation length, where the first stroke length is shorter than the first deformation length. Thus, by having a deformation length that is longer than the stroke length, it is possible to ensure that the dynamic part cannot apply a force that will exceed the deformation length of the load cell. Thus, when the calibration device is being operated, it is ensured that the stroke length of the actuator is less than the deformation (deflection) distance of the load cell, so that the load cell is only measuring within its capabilities.

In one exemplary embodiment of the present invention, the moveable part may have a second stroke length prior to or after calibration, where the second stroke length is longer than the first stroke length. Thus, the second stroke length may be utilized to apply tension between the base and the tank/container of the weighing system, where the second stroke length may be utilized to apply sufficient tension to the weighing system to deform the connection points and/or any deformable parts of the weighing system prior to calibration. Thus, when the deformable parts have been deformed, the calibration may be performed, where the first stroke length of the moveable part may be utilized to apply a force to the load cell without deforming the load cell beyond its capabilities. The first stroke length may be part of the second stroke length.

Within the understanding of the present disclosure, the deformation length of the load cell may be understood as being the maximum deformation a load cell is capable of deforming to measure the full range of the load cell. Thus, if a load cell has a capacity of 10 tonnes, the maximum deformation of the load cell will be obtained when the load cell measures a force that is around 10 tonnes.

In one exemplary embodiment, the actuator may be a hydraulic actuator, where the maximum fluid pressure of the hydraulic actuator may be less than 150 Bar, or more preferably less than 100 Bar. Thus, the hydraulic actuator may be a low hydraulic pressure actuator. Conventional hydraulic actuators operate at a high pressure, or around 500 bar, which means that when the hydraulic actuators are at their maximum capabilities, the hydraulic system is under high pressure. Thus, if the system is damaged or breaks, there are a number of safety risks. However, by using low pressure hydraulic actuators, it may be possible to reduce the risk of damage due to high pressure to reduce the risk for the operators of the calibration system and to reduce the risk of damaging equipment, such as the weighing system, should a failure of the hydraulic system occur. Furthermore, when using a low pressure hydraulic cylinder, it is also easier to keep a constant hydraulic pressure than when using a high pressure hydraulic cylinder. A constant hydraulic pressure is important for the stability of the calibration/the force applied via the calibration device. By having a low pressure hydraulic cylinder, the low pressure will reduce the wear and tear of e.g. the seals and the components of the hydraulic system. Furthermore, by having a low pressure hydraulic system it may be easier for the system to maintain a constant pressure for a predefined time period, as there is a reduced risk that seals will rupture and cause a leak of the hydraulic fluid.

In one exemplary embodiment, the first attachment part and/or the second attachment part may comprise a joint, e.g. a ball joint. By providing a ball joint at the first attachment part and/or the second attachment part the ball joint may ensure that the calibration device may adjust the force application axis during the application of tension force to the weighing device during calibration. Should the connection between the calibration device and the weighing device be off, the ball joint will reduce the friction in the connection between the weighing device and the calibration device and/or the foundation, thereby facilitating that the force application axis is correctly positioned and/or aligned when the tension force is applied between the foundation and the weighing system.

In one exemplary embodiment, the hydraulic device may be fixed relative to the housing, and/or where the piston is moveable along a force application axis (central axis) relative to the housing. The housing may be seen as a static or stationary part of the calibration device, where the position of a body of the hydraulic device may be fixed relative to the housing and thereby may also be fixed relative to the load cell. Thus, the hydraulic device and the housing may create a stable base for the load cell which may be seen as a static part of the calibration device, and where the piston rod is moveable along the force application axis, or the central axis of the housing, relative to the housing, the load cell and the body of the hydraulic device. Thus, when the piston is moved in a direction of the force application axis, the first end and the second end of the piston rod may move relative to the load cell. Thus, when the piston is moved using the hydraulic device in a direction away from the load cell, the first end and the second end move in a direction away from the load cell. Likewise, when the piston is moved using the hydraulic device in a direction towards the load cell, the first end and the second end move in a direction towards the load cell.

The load cell may be stationary relative to the housing, where the first attachment part and/or the second attachment parts may be moveable relative to the housing, allowing the first attachment part and/or the second attachment part to translate the force applied via the hydraulic device to a compression or tension force applied to the compression load cell. The hydraulic device or the hydraulic device body may be attached to the housing, so that the hydraulic cylinder may be stationary relative to the housing, and the piston, piston rod, or any moveable part that is coupled with or connected to the piston or piston rod may be moveable relative to the housing and/or the load cell and/or the first attachment part.

The calibration device may be connected between the base and the container in parallel to the weighing system of the container.

The hydraulic device may be of the kind where the first and the second end of the piston may be exposed, and/or where upon an application of hydraulic force, the first end of the piston may be manoeuvred in a direction towards the hydraulic device, while the second end of the piston may be manoeuvred in a direction away from the hydraulic device, when a force is applied via the hydraulic device in the direction of the force application axis. The piston may pull onto the base and/or the tank to calibrate the weighing system, while the housing is fixed relative to the base of the load cell.

In one exemplary embodiment, the stationary part further comprises a load transfer member having a first end and a second end, where the first end of the load transfer member is connected with the first attachment part, and where the second end of the load transfer part configured to apply compression force on the second end of the compression load cell.

In one exemplary embodiment, the load transfer member extends through a through-going opening of the load cell.

In one exemplary embodiment, the load cell is a compression load cell and/or a tension load cell.

The load receiving axis of the compression load cell may be in a direction that is normal (perpendicular) to the base of the compression load cell, so that the force application of the hydraulic device may be introduced into the compression load cell in a direction that is optimal for the compression load cell, and that the force applied via the hydraulic device may be applied to an optimal direction of the load cell. This means that the forces applied via the hydraulic device in the direction of the force application axis may be fully absorbed by the compression load cell via deformation of the load cell in an optimal manner. It may be understood that a force applied in a direction that may not be seen as normal to the base of the load cell may cause inaccuracies in the force registration of the load cell due to an unintended deformation of the load cell, e.g. where the load cell deforms more on one side than on another side.

In one exemplary embodiment, a tension force applied to the first end of the piston rod may be transferred or translated as compression force to be measured by a compression load cell. This means that the piston may be utilised to apply a tension force to a connection that extends from the foundation of a tank and towards the tank, where the foundation may e.g. be connected to the first attachment part and the tank may be connected to the second attachment part, allowing the hydraulic device (actuator device) to apply tension between the tank and the foundation. Thus, the tank may be connected to the foundation via the calibration device, and/or brackets extending from the attachment parts and towards the tank and/or the foundation.

The calibration device may be connected in parallel to the weighing system, where the tension force applied via the calibration device is transformed into a compression force onto the weighing system. Thus, the calibration device may pull the container/tank downwards towards the base, where the weighing system of the container may register the force applied via the calibration device, and the amount of the force applied via the calibration device may be used to calibrate the weighing system by a comparison of the values of the weighing system and the calibration device. Should a container be of a size where a plurality of calibration devices be used, the force applied by each calibration device may be summed to the total force being applied to the container. This may e.g. be the situation where a calibration device is positioned on each corner of a container or is distributed along a circumferential periphery of the container at a predetermined angle, e.g. where each calibration device is positioned at 90 degrees relative to the adjacent calibration device. In another embodiment, one calibration device may be utilised, e.g. where the calibration device may be attached to a bottom part of the container, in a central position of the container, and the calibration device may pull the container in a direction towards the base.

In one exemplary embodiment, the piston rod may have a hollow piston rod. The hollow piston rod may be part of a hollow plunger hydraulic cylinder, such as the RCH12 Single Acting of Enerpac, from Enerpac Tool Group, Bentley Road South, Darlaston, West Midlands, UK. The Cylinder may be a pull cylinder. The hollow cylinder may extend from a first end towards a second end of the hydraulic device, allowing access into the bore via the first and/or the second end of the hydraulic device. The piston may be positioned inside the bore of the hollow cylinder and be fixed in its position relative to the hollow cylinder, so that when a force is applied to the hollow cylinder, the hollow cylinder will apply the same amount of force to the piston. The piston, when positioned inside the hollow cylinder, may extend beyond the first and/or the second terminal ends of the hollow cylinder, so that the piston may extend from the inside of the hollow cylinder and to the outside of the hollow cylinder, in the direction of the force application axis. The hollow cylinder bore may have a central axis that is coaxial to the force application axis of the hydraulic device.

The use of a hollow piston rod (plunger) may mean that a force application part may be extended through the hollow piston rod, where the force application rod may have a first end that is configured to abut the hollow piston rod, while the force application rod at the second end may be connected with the second attachment part. The first end of the force application rod may have a diameter that is larger than the hollow piston rod, so that when a force is applied via the hollow piston rod, the first end of the hollow piston rod will transfer the force to the first end of the force application rod. The force application rod may be inserted into the hollow piston rod, where the applied force may be transferred from the first end of the hollow piston rod to the first end of the force application rod, where the force may further be transferred to the second attachment part of the calibration device. Alternatively, the force application part may be attached to the hollow piston rod via a mechanical connection, such as a threaded connection, welded connection, or other permanent or temporary connections, so that the force application part and the hollow piston rod operate as a single unit. Alternatively the force application rod may be inserted into the hollow piston rod in, where an increased diameter or a stop part of the force application rod prevents the force application rod from moving relative to the hollow piston rod when a force is applied to the calibration device. Thus, when a force is applied to the calibration device during a calibration, the force application rod follows the movements of the hollow piston part, so that a force applied to the hollow piston rod is transferred to the force application rod and the first attachment part.

The second attachment part may be attached directly to the piston rod via a mechanical coupling, so that the end of the piston rod that faces the attachment part is immoveably fixed relative to the second attachment part.

The cylinder may have a size in a direction coaxial with the force application axis beingless than 30cm, or more preferably less than 25cm, or even more preferably less than 20cm, or even more preferably less than 15cm.

In one exemplary embodiment, the dynamic assembly may further comprise a force application rod, where the force application rod extends along a central axis of the hydraulic device, and optionally where the force application rod is coaxial with a force application axis of the hydraulic device. The first end of the force application rod may have a diameter that is larger than the hollow piston rod, so that when a force is applied via the hollow piston rod, the first end of the hollow piston rod will transfer the force to the first end of the force application rod. The force application rod may be inserted into the hollow piston rod, where the applied force may be transferred from the first end of the hollow piston rod to the first end of the force application rod, where the force may further be transferred to the second attachment part of the calibration device.

Alternatively, the force application part may be attached to the hollow piston rod via mechanical connection, such as a threaded connection, welded connection, or other permanent or temporary connections, so that the force application part and the hollow piston rod operate as a single unit. Alternatively, the force application rod may be inserted into the hollow piston rod, where an increased diameter or a stop part of the force application rod prevents the force application rod to move relative to the hollow piston rod when a force is applied to the calibration device. Thus, when a force is applied to the calibration device during a calibration, the force application rod follows the movements of the hollow piston part, so that a force is applied to the hollow piston rod, the force being transferred to the force application rod and the first attachment part.

In one exemplary embodiment, the second attachment part is displaceable relative to the load cell, the hydraulic device and/or the first attachment part. This means that when a force is applied to the calibration device, the second attachment part may be moved relative to the stationary assembly, so that when a tension force is applied via the calibration device, the second attachment part may move in a direction towards the first attachment part and/or the other parts of the stationary assembly.

In one exemplary embodiment, at least part of the stationary part is configured to be stationary relative to the container and/or the base during calibration. This means that when a force is applied to the tank, the stationary part will maintain its position relative to the base and/or the tank in at least a vertical direction, allowing the stationary part to provide a counterforce relative to the dynamic part of the calibration device.

In one exemplary embodiment, the stationary part further comprises a load application part having a first end and a second end, where the first end is attached with the first attachment part or the second attachment part, and the second end is configured to transfer a force from the first attachment part to the load cell. The load application part may extend between a load receiving part of a load cell and the first attachment part. If the calibration device comprises a compression load cell, the load application part may be adapted to extend from the load receiving end of the compression load cell and towards the first attachment part, so that the applied force is transferred as a compression force to the load receiving end of the compression load cell. Thus, the load application part may push onto the load receiving end of the compression load cell. This may mean that a part of the load application part may be parallel to the load cell.

If the calibration device comprises a tension load cell, the load application part may extend from a load receiving arm of the load cell and to the first attachment part, allowing the applied force to be transferred as tension force to the load receiving arm of the tension load cell. Thus, the load application part may pull onto the load receiving arm of the tension load cell. This may mean that the load application part may extend in serial with the tension load cell.

In one embodiment, the stationary assembly and/or the dynamic assembly may be configured to have an adjustable distance between the first attachment part and the second attachment part which may be adjusted prior to performance of a calibration. This means that when the calibration device has been attached to a tank or a foundation, the distance between the first attachment part and the second attachment part may be adjusted in order to ensure that the calibration device is tautly (firmly, tightly) connected between the tank and the foundation, in order to ensure that any force applied via the calibration device is directly applied to the foundation and/or the part to be measured, e.g. a tank. Thus, there is no slack, prior to the application of a force using the calibration device.

The adjustable distance between the first attachment part and the second attachment part may be independent from the stroke of the moveable part and/or the moveable rod. Thus, when the calibration device is attached to a system that is to be calibrated, the distance between the first attachment part and the second attachment part may be adjusted without any movement of the moveable part and/or the moveable rod. This may be done by e.g. shortening the distance between the second end of the load cell and the second attachment part, and/or by shortening the distance between the actuator body the first attachment part. This may be achieved by providing a threaded rod between the first attachment part and/or the actuator body, where the first attachment part may have a cooperating thread, where a rotation of the cooperating thread may move the first attachment part closer to the actuator body. The same may be done with the second attachment part and the second end of the load cell.

In one exemplary embodiment, the first attachment part and/or the second attachment part may comprise a nut having an inner thread and a threaded rod having an outer thread. Thus, when the nut is rotated relative to the threaded rod, the position of the nut may change along the longitudinal axis of the threaded rod. Thus, in order to remove slack in of the calibration device between a tank attachment part and a foundation attachment part, the nut may be rotated along its rotational axis, which may move the nut in a direction towards the actuator body. The tank attachment part may have a cooperating surface, where the rotation of the nut does not move the nut relative to the cooperating surface, but where the threaded rod may move relative to the nut and the cooperating surface. The cooperating surface may have a first plane, where the plane of the cooperating surface may be coplanar and/or parallel to an outer surface of the nut, where the outer surface of the nut may have a second plane and where the longitudinal axis of the threaded rod is normal to the second plane and/or the first plane of the cooperating surface.

By providing an adjustable length between the first attachment part and the second attachment part, without having any movement of the actuator part of the calibration device, it is possible to provide a calibration, where the initial force applied by the actuator device is transferred directly to the load cell of the weighing system. Previous calibration devices require a movement of a piston of a hydraulic device prior to the initial force measurement of the calibration device, which means that the initial movement may offset the load cell of the calibration device prior to the initial measurement and to limit the stroke of the actuator. Thus, the calibration device in accordance with the present disclosure does not require the use of the actuator device to reset the measurement to zero, as the distance between the first attachment part and the second attachment part may be adjusted to reset the measurement of the calibration load cell to zero.

In one embodiment, the force application axis may be coaxial with a load measurement axis of the stationary part, and/or coaxial with the of the load receiving axis of the load cell.

A calibration system, as disclosed, may have a stationary assembly that is of a size where the calibration system may easily be retrofitted to a tank, as the stationary assembly and the remaining parts of the calibration system may be packed in a relatively small volume, height, length, i.e. where the system is compact. Thus, when e.g. a container is positioned on legs that are relatively small (i.e. in height) the compact size of the calibration device ensures that the calibration device may be attached between the container and the foundation.

The present disclosure may also relate to a calibration system for weighing systems, wherein the weighing system comprises: a tank with one or more support members configured to attach the tank to a foundation, at least one load cell positioned between the tank and the foundation, wherein the at least one load cell is configured to measure a force applied between the tank and the foundation, where the tank comprises a first attachment device and the foundation comprises a second attachment device, where the calibration device in accordance with the present disclosure is attached to the first attachment device and the second attachment device in order to provide a tension force from the tank to the foundation.

The present disclosure may also relate to another embodiment of a calibration device for weighing system, where the weighing system comprises a first attachment part configured to be attached to a container or a base, an actuator device body, a load cell having a first end and a second load receiving end, where the first end is mechanically coupled with the actuator device body and the second end is mechanically coupled with the first attachment part, a second attachment part configured to be attached to a container or a base, a moveable part reciprocating in the actuator device body along a force application axis and a moveable rod connected with the moveable part and connected with the second attachment part. It may be understood the person skilled in the art would be fully aware that that any one or more of the features disclosed in connection to the embodiments of the present disclosure, in the claims and in the detailed description may be applied to the present calibration system.

### Brief description of the drawings

The following is an explanation of exemplary embodiments with reference to the drawings, in which:
Fig. 1 is a perspective view of a calibration device,
Fig. 2 shows a side cross-sectional view of a calibration device,
Fig. 3 shows a calibration device attached to a container and a foundation,
Fig. 4 shows a calibration system attached to a container and a foundation,
Fig. 5 shows an embodiment of a calibration system attached to a container and a foundation,
Fig. 6 shows an embodiment of a calibration system for a weighing system of a vessel suspended from a deck,
Fig. 7 shows a schematic view of a calibration system having a tension load cell,
Fig. 8 shows a calibration system (device) attached to a leg of a container and a foundation,
Fig. 9 is a side view of one embodiment of a calibration device,
Fig. 10 shows an embodiment of a calibration device attached to a leg of a container and a foundation,
Fig. 11 is a side view of one embodiment of a calibration device,
Fig. 12 shows a side view of one embodiment of a calibration device.
Fig. 13 shows a side view of the embodiment of a calibration device shown in Fig. 12 attached to a container and a foundation,
Fig. 14 shows a side view of one embodiment of a calibration device, and
Fig. 15 shows a side view of the calibration device of Fig. 14 attached to a leg of a container and a foundation.

### Detailed description

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

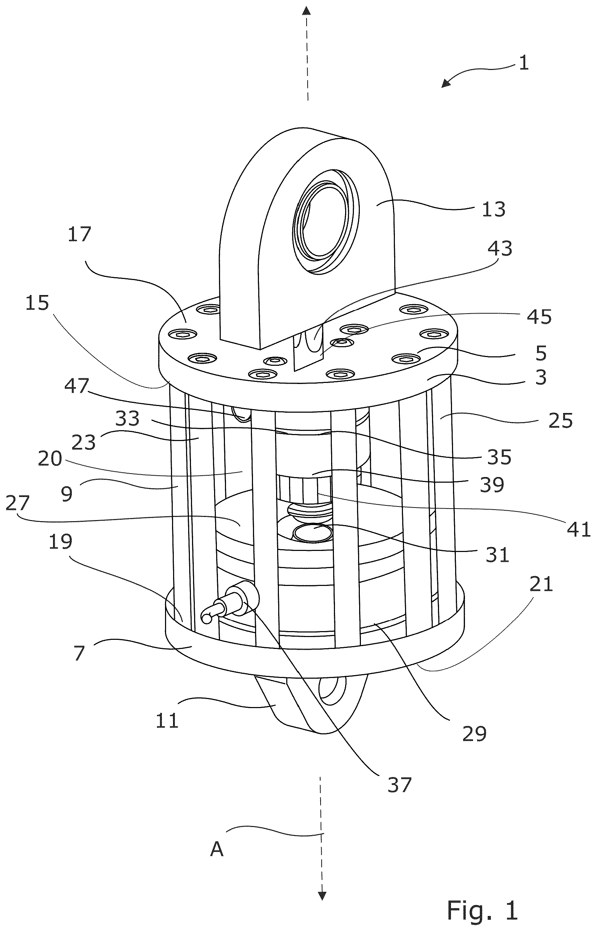

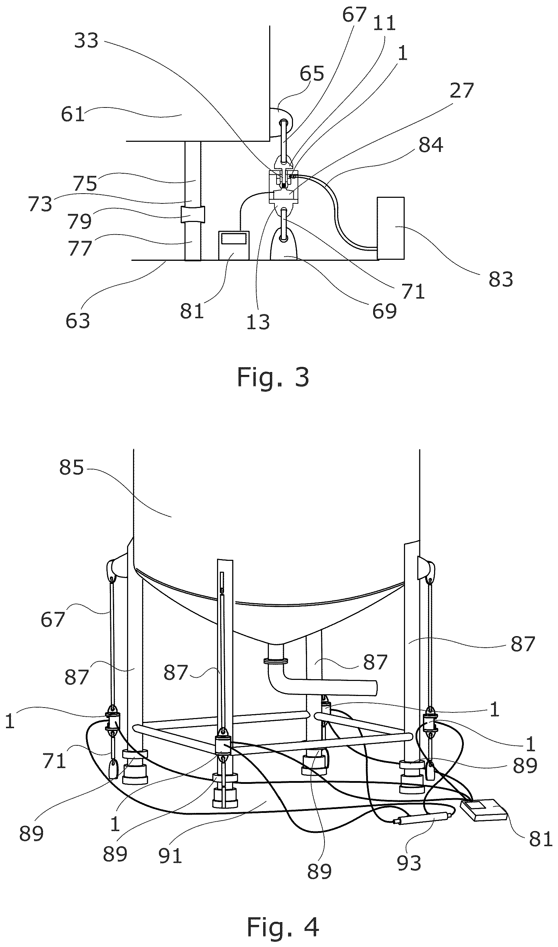

Fig. 1 shows a perspective view of a calibration device 1, where the calibration device 1 comprises a housing 3, where the housing 3 comprises a top part 5 and a bottom part 7, and a plurality of housing rods 9, 23, 25 connecting the top part 5 to the bottom part 7. The calibration device 1 further comprises a first connecting (attachment) part 11 and a second connecting (attachment) part 13, where the connecting parts 11, 13 are adapted to connect the calibration device to a container and a foundation, as shown in fig. 3. The top part 5 has an inner surface 15 and an outer surface 17, while the bottom part has an inner surface 19 and an outer surface 21. The inner surface 15 of the top part 5 and the inner surface 19 of the bottom part may define upper and lower boundaries for a housing volume 20. The housing rod 9, 23, 25 may connect the top part 5 and the bottom part 7 of the housing 3, where the housing rods may define at least part of a radial periphery of the housing volume 20. The housing rods 9, 23, 25 may be configured to maintain the position of the top part 5 of the housing 3 relative to the bottom part 7 of the housing, ensuring that the top part 5 and the bottom part 7 are stationary relative to each other during use.

The housing 3 may comprise a load cell 27, where in this example, the load cell is a compression load cell, where the load cell 27 may have a base part 29 and a load receiving part 31, where the base part 29 may be attached, optionally fixedly attached, to the inner surface 19 of the bottom part 7, allowing the bottom part 7 to function as a base or a counterforce to the load cell 27. The load receiving part 31 of the load cell may be adapted to receive a mechanical force in a direction towards the load receiving part along a force application axis A. The load cell 27 is thereby capable of transforming the force to an electrical signal, where the electrical signal represents the magnitude of the force applied to the load receiving part 31. The electrical signal may be output from the load cell 27 via an electrical connector 37 of the load cell 27, where the electrical connector 37 may provide a data and power interface to the compression load cell 27.

The calibration device 1 may further comprise a hydraulic device 33, where the hydraulic device 33 has a device body 35 which may be connected with the inner surface 15 of the top part 5 of the housing 3, allowing the top part 5 of the housing 3 to act as a counterforce to the body 35 of the hydraulic device 33. Thus, the body 35 and the compression load cell 27 may be fixed in position relative to each other via the housing 3. The hydraulic device 33 may further comprise a piston rod (plunger) 39, where the piston rod 39 may be moveable in a direction towards and away from the compression load cell 27, parallel to and/or coaxial to the force application axis A. The piston rod 39 may comprise a first end 41 which faces the compression load cell 27 and an opposite second end 43, where the piston rod may be connected to the second connecting part 13 via a force application part 40, allowing the second connecting part 13 to be moveable in a direction along the force application axis, and relative to the housing 3, the load cell and the first connecting part 11. The direction may be parallel to and/or coaxial to the force application axis A. The second end 43 of the force application part may extend out of a through-going opening 45 in the top part 5 of the housing 3, allowing the second end 43 to connect to the second connecting part 13 providing a mechanical connection to the piston rod 39 of the hydraulic device 33. The piston rod 39 may be moveable along the force application axis A using hydraulic force, where the hydraulic force may be applied via a hydraulic interface 47 of the hydraulic device 33. The hydraulic interface 47 may be connected to a hydraulic pump 6 (as seen in Fig. 4), via a hydraulic hose 84 (as shown in Fig. 4).

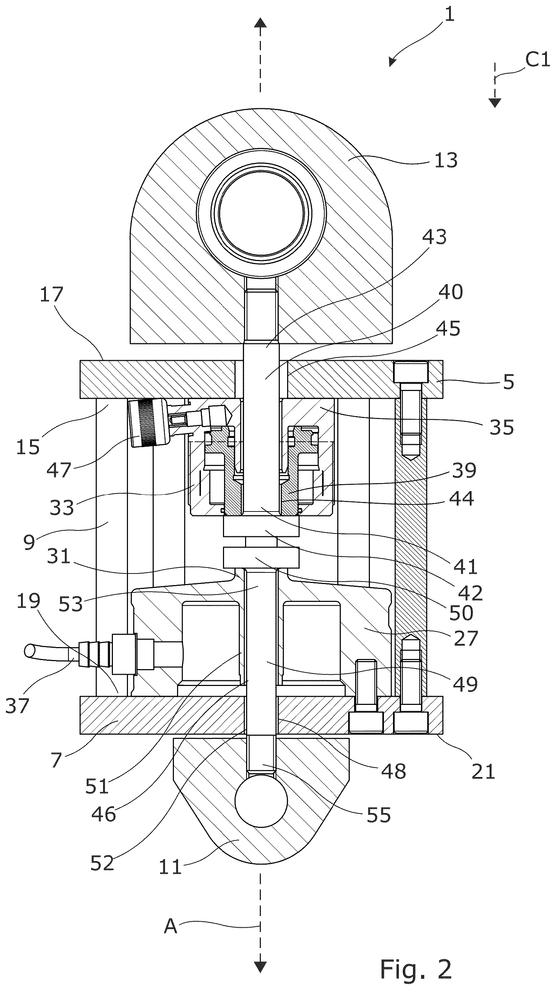

The first connecting part 11 may be in mechanical communication with the load receiving part 31 of the load cell 27, via a load application rod (load application part) 49 (shown in Fig. 2), where the load application rod 49 extends through a through-going opening 51 (shown in Fig. 2) in the load cell, so that a first end 53 of the load application rod applies a load to the load receiving part 31, and a second end 55 of the load application rod is attached to the first connecting part 11. Any tension force applied to the first connecting part, in a direction along the force application axis may be transferred to the load receiving part 31 of the load cell.

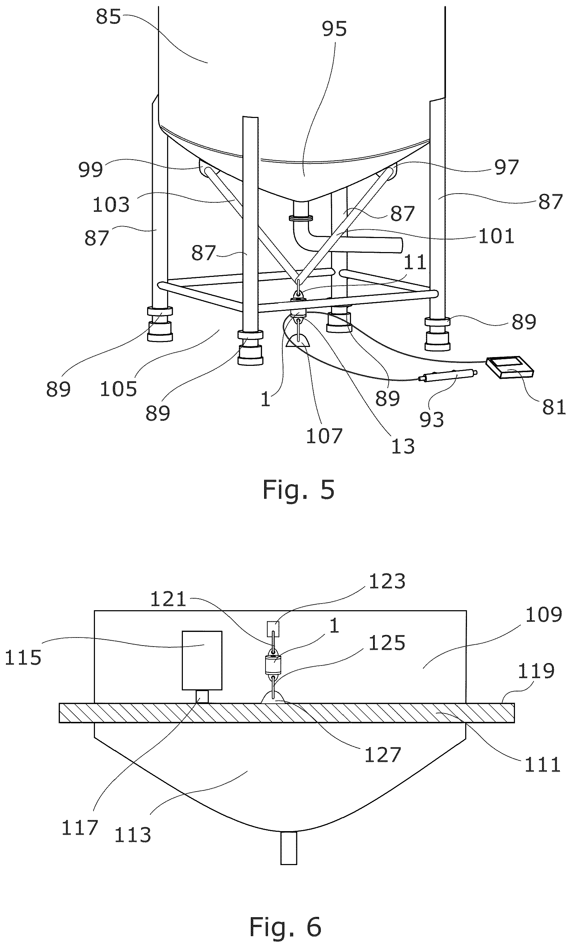

The hydraulic force may be applied in the direction of the force application axis, allowing the piston rod 39 to move in a direction towards the stationary assembly, e.g. the load cell 27. The second end of the force application part may be connected with a container or a foundation (as shown in Fig. 6) so that a hydraulic force, where the second end 43 and the second attachment part 13, may be manoeuvred in a direction towards the bottom part of the housing in the direction of the force application axis A. Thus, the force applied to the foundation and/or the basis via the second end of the piston may be equal to force applied to the load receiving part 31 of the compression load cell via the load application part 49. Thus, the load cell 27 may measure the tension force applied via the calibration device 1 between a container and/or a foundation.

Fig. 2 shows a cross-sectional side view of the calibration device 1, in accordance with the present disclosure. The second attachment part 13 may be attached to a second end 43 of the force application part 40, where the first end 41 of the force application part 40 may be provided with an end stop 42, where the end stop has a larger diameter than the inner diameter of the piston rod 39. Thus, when the piston rod is manoeuvred in the direction C1, the piston rod will engage the end stop 42 and thereby manoeuvre the second attachment part 13 via the force application part 40 in the direction C1, thereby reducing the distance from the second attachment part 13 to the stationary assembly of the hydraulic device body 35, load cell 27 and/or the first attachment part 11. The piston rod 39 may be a hollow piston rod having a through-going opening 44 which extends into the inner volume 20 of the housing 3.

The load cell 27 may have a through-going opening 46, where a load application part 49 extends through the through-going opening 52 from the load receiving end 31 and through an opening 48 in the bottom part 7, where a second end 55 of the load application part 49 is attached to the first attachment part 11. The load application part 49 may be provided with a load stopper 50 at its first end 53, where the load stopper 50 has a diameter that is larger than the inner diameter of the through going opening 52. Thus, when the force is applied in the direction of C1, the load stopper 50 applies a force to the load receiving part 31 of the load cell 27. During calibration, where the first attachment part 11 is attached to a base, and the second attachment part 13 is attached to a container/tank, the force applied via the hydraulic device 33 is directly proportional to the force applied to the load receiving part 31 of the load cell 27.

Fig. 3 shows a schematical view of a calibration device 1 used together with a container 61 and a foundation 63. The container 61 may have a container leg 73 which may have an upper part 75 and a lower part 77, where the upper part is connected to the container 61 and the lower part 77 may be connected to the foundation 63. The upper part 75 and the lower part 77 may be separated via a load cell 79, which is capable of measuring the weight of the content of the container 61. Other configurations of the positioning of the load cell 79 relative to the support leg 73 may be envisioned, where the load cell may e.g. be positioned between the tank 61 and the support leg 73 or between the foundation 63 and the support leg 73.

In order to perform a calibration, the first attachment part 11 of the calibration device 1 may be connected to a container attachment part 65 via a first link 67, while the second attachment part 13 of the device 1 may be connected to a foundation attachment part 69 via a second link 71, where the calibration device is intended to apply a tension force between the tank 61 and the foundation 63 to imitate the weight of the content of the container 61, when e.g. the container 61 is full, empty or has a known amount of content, to calibrate and verify the container load cell 79. The load cell 27 of the calibration device 1 may be connected to a control device 81, where the control device 81 may e.g. record and display the force applied by the calibration device. The hydraulic device 33 may be connected to a pump 83, where the pump is configured to provide a hydraulic fluid under pressure to the hydraulic device 33 via a hydraulic hose 84, in order to provide a tension force between the container 61 and the foundation 63.

The first link 67 and/or the second link may be adjustable in length, where it may be necessary to remove all slack from the calibration device between the container attachment part 65 and the foundation attachment part 69 prior to calibration. The adjustable length may be achieved by providing a threaded coupling between the first attachment part 11 and the container attachment or any form of adjustable length.

When the calibration device 1 is attached the container attachment part 65 and the foundation attachment part 69, the calibration device may be zeroed by removing all slack between the foundation attachment part and the container attachment part. When a calibration is performed, the calibration device provides a tension force between the foundation attachment part and the container attachment part. In practice, it has been observed that when the force is applied via the calibration device, the container attachment part 65 and/or the foundation attachment parts may be deformed slightly, which means that a part of the tension force applied via the calibration device may be absorbed by the foundation attachment part 69 and the container attachment part 65, which effectively means that in order to perform a calibration of the container load cell 79, a predefined amount of tension may have to be applied by the calibration device, in order to deform the attachment parts 65, 69. The deformation of the attachment parts may be predictable, so that when the parts 65, 69 have been deformed, the substantial amount of the tension force of the calibration device will be transferred to the container load cell, and where the load measured in the container load cell 79 corresponds at least 90% with the load measured in the load cell of the calibration device, or preferably corresponds at least 95% with the load measured in the load cell of the calibration device, or more preferably corresponds at least 98% with the load measured in the load cell of the calibration device.

Fig. 4 shows a perspective view of a tank 85 having four legs 87 and four tank load cells 89 that are configured to weigh the content of the tank 85. The calibration device 1 may be utilised in a calibration system, where one calibration device 1 may be connected between the tank 85 and the foundation 91 e.g. in parallel to each of the load cells 89, similar to that shown in Fig. 6. Each hydraulic device 33 (as shown in Fig. 2) of the calibration device 1 may be connected to a hydraulic source 93 (which may be a pump or a distributor part), allowing the hydraulic fluid to be forced into the calibration devices 1 simultaneously. Likewise, the load cells 27 (as shown in Fig. 3) may be connected to a control device 81, where the control device may display and/or record the force applied in real time, where the force applied may be utilised to control the quality and accuracy of the tank load cells 89.

Fig. 5 shows a similar tank 85 to that shown in Fig. 4, where the calibration device 1 may be connected in a different manner to the tank 85 than that shown in Fig. 4. The tank 85 may be provided with a bottom 95, where the bottom may be provided with a first tank attachment part 97 and a second tank attachment part 99, both being attached to the bottom 95 of the tank 85. In this embodiment of a calibration system, only one calibration device 1 is utilised, where the first attachment part 11, is connected to the first tank attachment part 97 and the second tank attachment part 99, via a first link 101 and a second link 103, respectively. Alternatively, the tank may be provided with a plurality of tank attachment parts, such as three or four tank attachment parts. The second attachment part 13 may be connected to the foundation 105 via a foundation attachment 107. The first 97 and second tank attachment parts 99, may be distributed onto the bottom 95 of the tank 85 in such a manner that when a tension force is applied to the calibration device 1, the tension force is distributed equally around the tank load cells 89 that may be positioned at the legs 87 of the tank 85, and the tension force applied may be utilised to control the quality and accuracy of the tank load cells 89.

Fig. 6 shows a schematical view of a suspended tank 109, where the tank 109 is suspended from a deck 111, and the bottom 113 of the tank is below the deck 111. In this example, the deck may be seen as a foundation or a base for the vessel/container. The tank 109 may be provided with a plurality of load cell brackets 115 that are attached to the tank 109, and where a tank load cell 117 is positioned between the bracket 115 and the surface 119 of the deck 111. Where the tank load cells 117 may be part of the weighing system of the tank 109. The calibration device 1, may be attached to the tank 109 and the deck 111 via a first link 121 attached to a tank attachment part 123 and a second link 125 attached to a deck attachment part 127. The calibration device may be positioned centrally between two load cell brackets 115 or may be straddled across one load cell bracket 115. The person skilled in the art would recognise that it is important that the force applied via the calibration device 1 is predictably applied to the tank load cell 117. As an example, if the tank has four brackets 115, one calibration device may be arranged equidistantly between two brackets 115 so that the calibration system has four calibration devices. The present calibration device is advantageous to such applications, as the distance between the top of the tank and the upper surface of the deck may be relatively short.

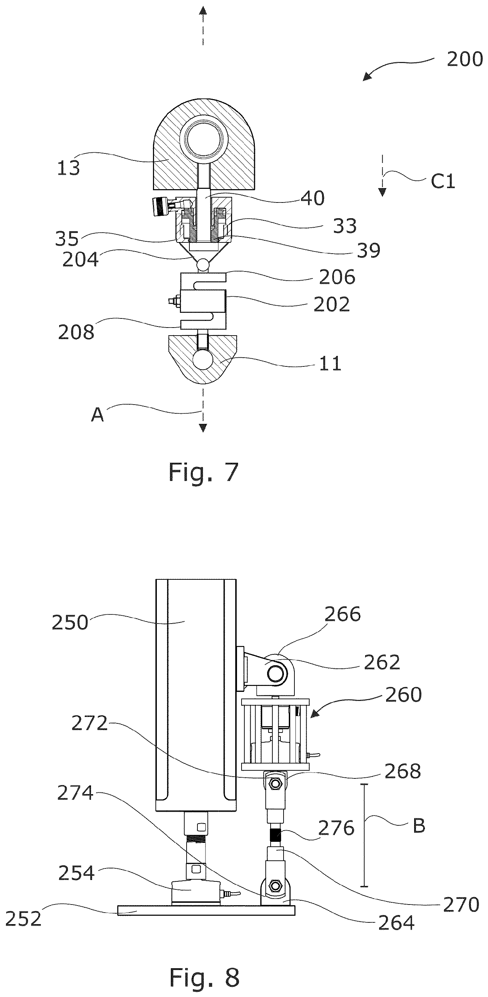

Fig. 7 shows a schematic view of a calibration device 200 having a tension load cell 202 according to the present disclosure. The tension load cell may be any type of tension load cell, where in this embodiment it is shown as an S-type load cell. The second attachment part 13, the hydraulic device 33 and the force application rod 40 are identical to those shown in Fig. 1 and 2, where the housing parts 3 have been removed. In this embodiment, a first arm 206 of a tension load cell 202 has been attached via a coupling part 204 to the body 35 of the hydraulic device 33, while a second arm 208 has been attached to a first attachment part 11. In this example, the hydraulic device body 35, the load cell 202 and the first attachment part 11 comprise the stationary assembly of the stationary assembly, while the piston rod 39, the force application part (rod) 40 and the second attachment part 13 comprise the dynamic assembly of the calibration device. During calibration, where the first attachment part 11 and the second attachment parts are connected to a foundation and a tank, and a force is applied in the direction C1 by the hydraulic device to the piston rod 40, the first arm 206 of the load cell 202 and the second arm 208 of the load cell 202 are pulled in their opposite directions, and the load cell registers the load applied by the hydraulic device.

Fig. 8 shows a schematic view of a calibration device 260 setup shown at one leg 250 of a tank (not shown), where the leg 250 is positioned on a foundation 252, having a compression load cell 254 to monitor the weight of the contents of the tank. The load cell 254 is positioned between the foundation 252 (base) and the tank leg 250. In a parallel setup, a calibration device 260 has been attached so that it extends a connection point 262 of the tank/leg and a connection point 264 of the foundation 252. The second attachment part 266 of the calibration device 260 may be attached to the leg and the first attachment part 268 may be connected via a link 270 to the connection point 264 of the foundation 252. The calibration device 260 may also be attached upside down, where the first attachment part 268 may be connected to the connection point 262 of the leg, while the second attachment part 266 may be connected to the connection point 264 of the foundation 252.

The link 270 may have a first end 272 and a second end 274, having an adjustable part 276 extending between the first end 272 and the second end 274. The adjustable part 276 may be shortened or lengthened along the distance B, so that the calibration device 266 is taut between the connection point 262 of the leg and the connection point 264 of the foundation. This may be advantageous, where the calibration device 260 is utilised for a plurality of tanks and/or containers, where the size of the containers may be different. Thus, the adjustable length of the link 270 may ensure that the end stop 42 (shown in Fig. 2) and the load stopper 50 (seen in Fig. 2) abut the bottom part of the piston rod 39 and the load receiving part 31, prior to application of a hydraulic force using the calibration device. The adjustable part 276 may be adjusted by a threaded coupling, where rotation of the coupling in one direction may shorten the link, and a rotation in the opposite direction may lengthen the link.

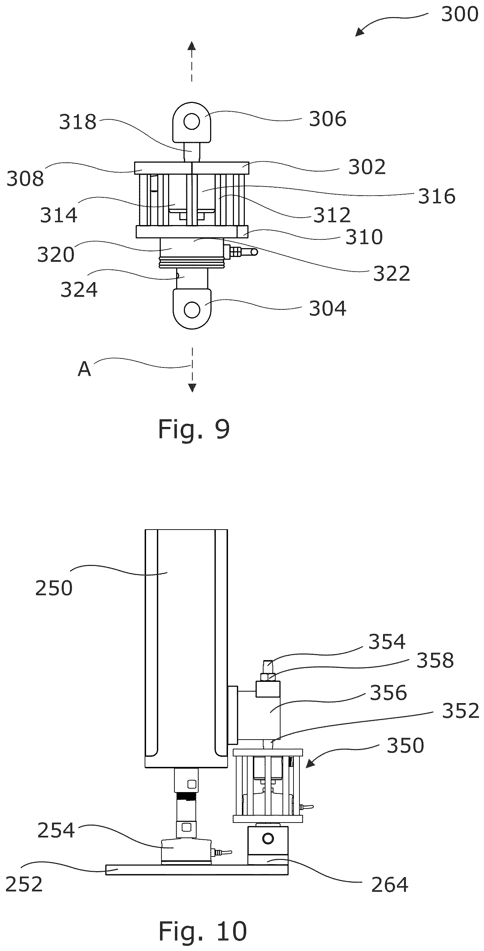

Fig. 9 shows a schematic view of a calibration device 300 having a housing 302, a first attachment part 304, a second attachment part 306. The housing comprises a top part 308 and a bottom part 310 and a plurality of housing rods 312 connecting the top part 308 to the bottom part 310. The connecting parts 304, 306 may be adapted to connect the calibration device 300 to a container and a foundation, as shown e.g. in fig. 3.

The calibration device may comprise a hydraulic device 314, where the hydraulic device has a device body 316 which may be connected to the housing and/or to the top part 308 of the housing 302. The hydraulic device 314 may further comprise a piston rod (plunger) 318, where the piston rod 318 may be moveable in a direction towards and away from the housing 302 in parallel to and/or coaxial to the force application axis A. The piston rod 318 may be attached to the second attachment part 306, where the piston rod 318 and the second attachment part 306 define at least part of the dynamic assembly of the calibration device 300.

The calibration device 300 may further comprise a load cell 320, where the load cell has a base 322 and a load receiving end 324, and where the base 322 of the load cell 320 may be connected to the bottom part 310 of the housing 302 and the load receiving end 324 may be connected to the first attachment part 304.

The housing 302, the hydraulic device body 316, the load cell and the second attachment part may define at least part of a stationary assembly of the calibration device 300, where the dynamic assembly is capable of moving relative to the stationary assembly, and thereby apply a force along the force application axis A, where the dynamic assembly provides a dynamic force, while the stationary assembly provides a counterforce to the dynamic force, when the first and the second attachment parts are connected to a base and e.g. a container, to calibrate the weighing apparatus of a container. The load cell may be mechanically coupled with the hydraulic device body via the housing 302, in the form of the bottom part 310, the housing rods 312 and the top part 308.

The load cell 320 in this embodiment may be a tension load cell, where the load cell is capable of registering and quantifying a tension force that is applied between the base end and the load receiving end of the load cell. In this example the load cell may be a DLC load cell from Eilersen Electric Digital Systems A/S, where a disclosure of this type of load cell has been made in WO2019068292. Such a load cell has previously been disclosed as a compression load cell, but the inventors have discovered that the load cell may also be utilized as a tension load cell for a calibration device 300 as presented in the present disclosure. The inventors have found out that the load cell has a high precision for the present application and can be utilized as tension load cell by providing tension force along the force application axis A.

Fig. 10 shows a schematic drawing of a calibration device 350 setup shown at one leg 250 of a tank (not shown), where the structure of the leg and the setup is comparable to the setup shown in Fig. 8. The difference between the current calibration device 350 and the calibration device in Fig. 8 is that the second attachment part 352 may be a threaded road 354 which is connected to the leg 250 via a connecting point 356 which has an opening (not seen) where the threaded rod may be positioned and where a fastening member 358 (e.g. nut) may be utilized to fix the threaded rod 354 relative to the connecting point 356. The provision of the threaded rod 354 may assist the users in adjusting the starting position of the calibration device 350, so that the calibration device 350 is taut between the connection point 356 and the foundation. Thus, it is possible to adjust the position of the fastening member 358 on the threaded rod 354 to accommodate for different sizes of the containers and/or legs of the containers, and the distance between connection points of the container and the foundation. A similar adjustment mechanism may also be applied to the first attachment part.

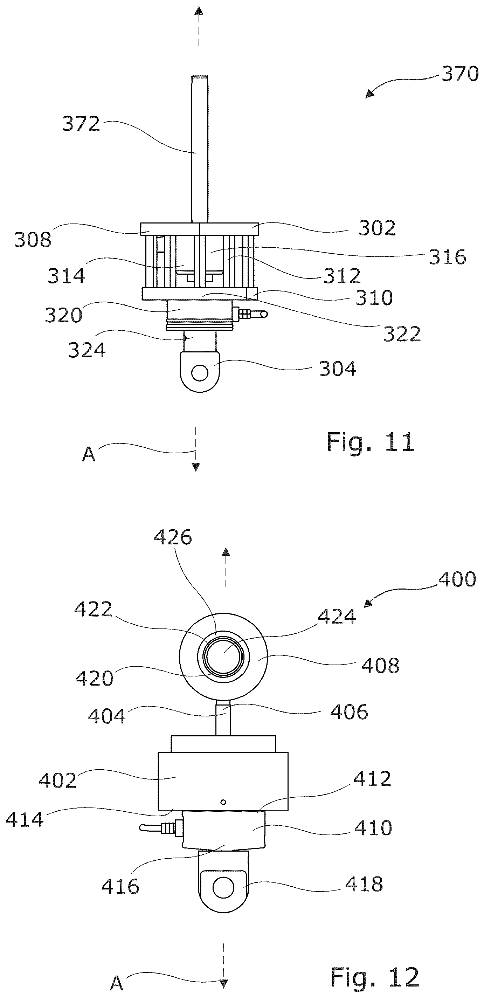

Fig. 11 shows a schematic side view of a calibration device 370, which is largely identical to the calibration device 300 shown in Fig. 9. The difference between the exemplary calibration device 370 and the calibration device 300 shown in Fig. 9 is that the second attachment part 306 has been changed, where the second attachment part of the present calibration device 370 is in the form of a piston rod 372. The piston rod 372 may be a threaded piston rod, as shown in the exemplary embodiment of Fig. 10, or may be provided with other types of connecting parts, allowing the piston rod 372 to be attached to a container or a foundation. Thus, the piston (not shown) of the hydraulic device 314 and the piston rod 372 may be utilized as the dynamic assembly of the calibration device 370, while the housing 302, the hydraulic device body 316, the load cell 320 and the first attachment part 304 may be utilized as the stationary assembly of the calibration device.

The piston rod and the piston of the hydraulic device may be a unitary assembly, where the piston rod and the piston may be permanently connected to each other, or may alternatively be separate parts that are fixed relative to each other when tension is being provided to the calibration system to the weighing system.

Fig. 12 shows a side view of a calibration device 400, where the calibration device comprises an actuator device body 402 and a moveable rod 404 that is reciprocating with the actuator device body 402. The moveable rod 404 comprises a second end 406 having a second attachment part 408, which is intended to be attached to a foundation or a container. The calibration device 400 comprises a load cell 410 having a first end 412 that is attached to a second end 414 of the actuator device body 402, where the load cell 410 comprises a second end (load receiving end) 416 which is attached to a first attachment part 418.

The second attachment part 408 comprises a ball joint 420, where the ball joint 420 comprises a ball 422 having an attachment opening 424, where the ball is configured to rotate inside a socket 426, allowing the ball 422 and the socket 426 to move relative to each other.

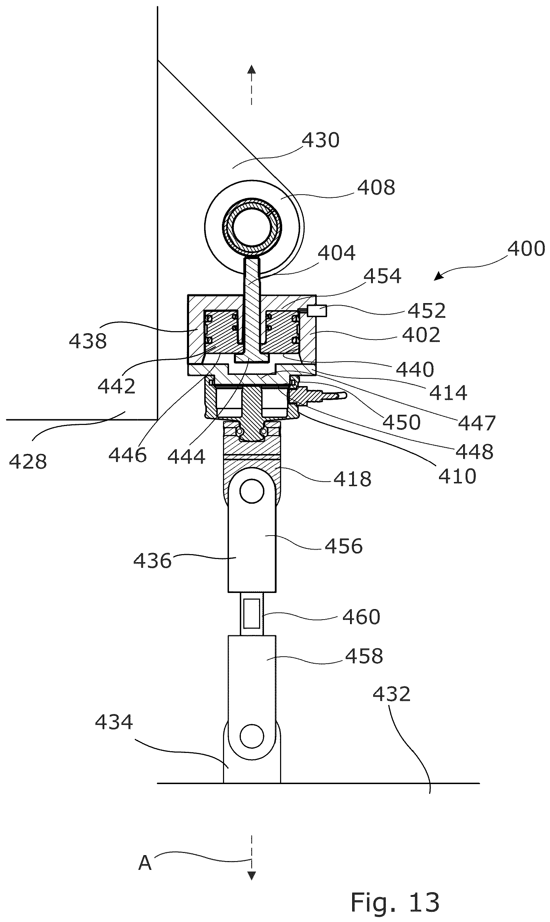

Fig. 13 shows a sectional side view of the calibration device 400 shown in Fig. 12, where the second attachment part 408 of the calibration device 400 is connected to a container (weighing device) 428 via a container connection part 430, and the first attachment part 418 is connected to a foundation 432 via a foundation connecting part 434 and an adjustable length bracket 436.

The actuator device body 402 comprises a cylinder barrel 438 having an inner surface 440, where a piston 442 reciprocates with the inner surface 440 of the cylinder barrel 438, and where the piston is moveable in the direction of the force application axis A. A hydraulic fluid may be applied via a hydraulic connection 452 into the cylinder space 454 to force the piston in a direction towards the foundation 432 (in the shown orientation of the actuator device body). The moveable rod 404 comprises a first end 444 that is connected with a second end 446 of the piston 442, so that when the piston is moved in a direction towards the foundation 432 along the force application axis A, the second attachment part 408 is pulled along with the piston 442 and the moveable rod 404, thereby shortening the distance between the first attachment part 418 and the second attachment part 408, and thereby applying a tension force between the container 428 and the foundation 432.

The second end 414 of the actuator device body 402 comprises a protrusion 447, where the first end 412 of the load cell 410 comprises a depression 448 that matches the protrusion 446, allowing the load cell to be securely attached to the second end 414 and secured in position using a securing member 450. The second end 416 of the load cell 410 is securely connected to a bracket 436, where the bracket 436 comprises a first bracket part 456 and a second bracket part 458 that are connected to each other via a connector 460, where the connector 460 may be a threaded rod interacting with corresponding threads in the first bracket part 456 and the second bracket part 458. Thus, when the connector 460 is rotated relative to the first bracket part 456 and the second bracket part 458 along a rotational axis parallel to the force application axis A, the distance between the first bracket part 456 and the second bracket part 458 may be lengthened and/or shortened, allowing the slack to be removed from the calibration device and making the connection between the container connection part 430 and the foundation connection part 434 to be taut, thereby providing a zero point for the calibration of the load cell of the weighing system (which the container 428 is a part of).

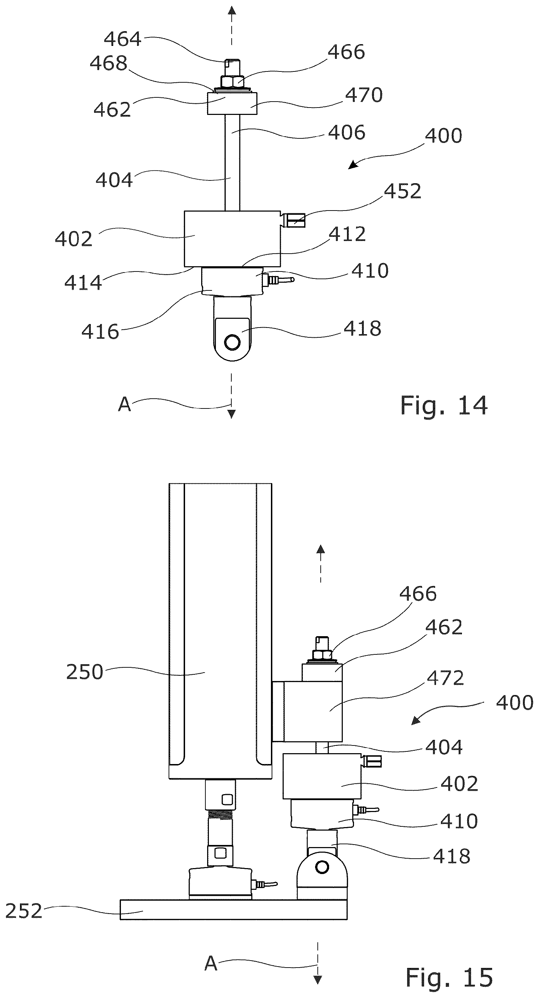

Fig. 14 is a side view of a calibration device 400 similar to that disclosed in Fig. 12 and 13, having the same components and parts as the calibration device of Fig. 12 and 13, where the difference is that the second end 406 of the moveable rod 404 has a second attachment part 462 in the form of a threaded end part 464, which has a nut 466, an optional spacer 468 and a connection block 470 which the second end 406 of the rod 404 extends through. Thus, by rotating the nut 466 in a clockwise and/or counterclockwise direction along a rotational axis parallel with the force application axis, the position of the nut may be changed along the length of the rod 404.

Fig. 15 shows the calibration device 400 of Fig. 14 being connected to a leg 250 of a container (not shown), similar to that shown in Fig. 10 and Fig. 8. The second attachment part 462 may be a threaded road 404 which is connected to the leg 250 via a connecting point 472 which has an opening (not seen) where the threaded rod may be positioned and where a fastening member 466 (e.g. nut) may be utilised to fix the threaded rod 464 relative to the connecting point 472. The provision of the threaded rod 404 may assist the users in adjusting the starting position of the calibration device 400, so that the calibration device 400 is taut between the connection point 472 and the foundation 252. Thus, it is possible to adjust the position of the fastening member 466 on the threaded rod 404 to accommodate for different sizes of the containers and/or legs of the containers, and the distance between connection points of the container and the foundation. Thus, it is possible to zero the calibration device prior to calibration without having to move the moveable part of the actuation device.

The load cells shown in Fig. 7, 9 and 11-15 are tension load cells, where the force measured by the load cells extends in a direction extending parallel to the force application axis and in the direction from the first end to the second end, where the force is configured to deform the load cell by stretching the load cell in its longitudinal direction. Thus, load application end of the load cell is configured to be pulled in a direction away from the base end of the load cell.

Thus, the load cells used in the present disclosure may both be compression load cells and tension load cells.

The use of the terms "first", "second", "third" and "fourth", "primary", "secondary", "tertiary" etc. does not imply any particular order but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than restrictive sense. The claimed invention is intended to cover all alternatives, modifications, and equivalents.

### List of references

- 1: Calibration device
- 3: Housing
- 5: Top part of housing
- 7: Bottom part of housing
- 9: Housing rod
- 11: First connecting part
- 13: Second connecting part
- 15: Inner surface of top part
- 17: Outer surface of top part
- 19: Inner surface of bottom part
- 20: Housing volume
- 21: Outer surface of bottom part
- 23: Housing rod
- 25: Housing rod
- 27: Load cell
- 29: Base part of load cell
- 31: Load receiving part of load cell
- 33: Hydraulic device
- 35: Body of hydraulic device
- 36: Force application part
- 37: Electrical connector of Load cell
- 39: Piston rod
- 40: Force application part
- 41: First end of force application part
- 42: End stop
- 43: Second end of force application part
- 44: Through going opening of piston rod
- 45: Through going opening in Top part of housing
- 46: Through going opening of load cell
- 47: Hydraulic interface
- 49: Load application part
- 50: Load stopper
- 51: Force application unit
- 52: Through-going opening bottom part
- 53: First end of load application part
- 55: Second end of load application part
- 61: Container
- 63: Foundation
- 65: Container attachment part
- 67: First link
- 69: Foundation attachment part
- 71: Second link
- 73: Container leg
- 75: Upper part of container leg
- 77: Lower part of container leg
- 79: Load cell
- 81: Control device
- 83: Pump
- 85: Tank
- 87: Tank leg
- 89: Tank Load cell
- 91: Foundation
- 93: Hydraulic source
- 95: Bottom of tank
- 97: Tank attachment part
- 99: Tank attachment part
- 101: First link
- 103: Second link
- 105: Foundation
- 107: Foundation attachment
- 109: Suspended tank
- 111: Deck
- 113: Bottom of tank
- 115: Load cell bracket
- 117: Tank load cell
- 119: Surface of the deck
- 121: First link
- 123: Tank Attachment part
- 125: Second link
- 127: Deck attachment part
- 200: Calibration device
- 202: Tension load cell
- 204: Coupling part
- 206: First arm
- 208: Second arm
- 250: Leg of tank
- 252: Foundation
- 254: Compression load cell
- 260: Calibration device
- 262: Tank Connection point
- 264: Foundation connection point
- 266: Second attachment part
- 268: First attachment part
- 270: Link
- 272: First end
- 274: Second end
- 276: Adjustable part
- 300: Calibration device
- 302: Housing
- 304: First attachment part
- 306: Second attachment part
- 308: Top part
- 310: Bottom part
- 312: Housing rods
- 314: Hydraulic Device
- 316: Hydraulic device body
- 318: Piston rod
- 320: Load cell
- 322: Base end
- 324: Load receiving end
- 350: Calibration device
- 352: Second attachment part
- 354: Threaded rod
- 356: Connecting point
- 358: Fastening member (nut)
- 370: Calibration device
- 372: Piston rod
- 400: Calibration device
- 402: Actuator device body
- 404: Moveable rod
- 406: Second end of moveable rod
- 408: Second attachment part
- 410: Load cell
- 412: First end of load cell
- 414: Second end of actuator device body
- 416: Second end of load cell
- 418: First attachment part
- 420: Ball joint
- 422: Ball
- 424: Attachment opening
- 426: Socket
- 428: Container (weighing system)
- 430: Connection part
- 432: Foundation
- 434: Foundation connecting part
- 436: Adjustable length bracket
- 438: Cylinder barrel
- 440: Inner surface of cylinder barrel
- 442: Piston
- 444: First end of moveable rod
- 446: Second end of piston
- 447: Protrusion on actuator device body
- 448: Depression on load cell
- 450: Securing member
- 452: Hydraulic connection
- 454: Cylinder space
- 456: First bracket part
- 458: Second bracket part
- 460: Connector
- 462: Second attachment part
- 464: Threaded end part
- 466: Fastening member
- 468: Spacer
- 470: Connection block
- 472: Connection point
- A: Force application axis
- C1: Force direction
- C2: Force direction

## Claims

1. A calibration device for weighing systems, the calibration device having a stationary assembly and a dynamic assembly, wherein the dynamic assembly is configured to move relative to the stationary assembly during use, wherein
- the stationary assembly comprises:
∘ a first attachment part configured to be attached to a container or a base,
∘ an actuator device body, and
∘ a load cell having a first end and a second receiving end, where the first end is mechanically coupled with the actuator device body and the second end is mechanically coupled with the first attachment part,
- the dynamic assembly comprising:
∘ second attachment part configured to be attached to a container or a base, and
∘ a moveable part reciprocating in the actuator device body along a force application axis and a moveable rod connected with the moveable part and connected with the second attachment part.

2. A calibration device for weighing systems in accordance with claim 1, wherein the stationary assembly further comprises a housing.

3. A calibration device for weighing systems in accordance with claim 1, wherein the stationary part further comprises a load transfer member having a first end and a second end, where the first end of the load transfer member is connected with the first attachment part, and where the second end of the load transfer part configured to apply compression force or tension force on/to the second end of the compression or tension load cell.

4. A calibration device for weighing systems in accordance with claim 3, wherein the load transfer member extends through a through-going opening of the load cell.

5. A calibration device for weighing systems in accordance with claim 1, wherein the load cell is a compression load cell and/or a tension load cell.

6. A calibration device for weighing systems in accordance with any of the preceding claims, wherein the piston rod may be a hollow piston rod.

7. A calibration device for weighing systems in accordance with any of the preceding claims, wherein the dynamic assembly may further comprise a force application rod, where the force application rod extends along a central axis of the hydraulic device, and optionally where the force application rod is coaxial with a force application axis of the hydraulic device.

8. A calibration device for weighing systems in accordance with any of the preceding claims, wherein the second attachment part is displaceable relative to the load cell, the hydraulic device and/or the first attachment part.

9. A calibration device for weighing systems in accordance with any of the preceding claims, wherein at least part of the stationary part is configured to be stationary relative to the container and/or the base during calibration.

10. A calibration device for weighing systems in accordance with any of the preceding claims, wherein the calibration device is configured to apply a force between a container and a base.

11. A calibration device for weighing systems in accordance with any of the preceding claims, wherein the stationary assembly and/or the dynamic assembly may be configured to have an adjustable distance between the first attachment part and the second attachment part and may be adjusted prior to performance of a calibration device.

12. A calibration device for weighing systems in accordance with any of the preceding claims, wherein the actuator device may be a hydraulic device, a mechanical actuating device or an electrically actuating device.

13. A calibration device for weighing systems in accordance with any of the preceding claims, wherein the stationary part further comprises a load application part having a first end and a second end, where the first end is attached with the first attachment part or the second attachment part, and the second end is configured to transfer a force from the first attachment part to the load cell.

14. A calibration device for weighing systems in accordance with any of the preceding claims, wherein the actuator device is a hydraulic actuating device, such as a hydraulic cylinder having a moveable piston, where the actuator body and/or the housing encircles a hydraulic piston and/or a hydraulic rod.

15. A calibration device for weighing systems in accordance with any of the preceding claims, wherein the first attachment part and/or the second attachment part comprises a joint, or more preferably a ball joint.
